# DEMANDE DE BREVET EUROPEEN

(11) **EP 3 771 080 A1**
(43) Date de publication de la demande: **27.01.2021**
(21) Numéro de dépôt: 20186477.4
(22) Date de dépôt: 17.07.2020
(51) Int. Cl.: H02M 1/36, H02M 3/158, H02M 1/00

(54) **DÉMARRAGE D'UNE ALIMENTATION À DÉCOUPAGE**

(30) Priorité: 22.07.2019 FR 1908288
(71) Demandeur: STMicroelectronics (Rousset) SAS, 13790 Rousset (FR)
(72) Inventeur: ORTET, Sebastien, 13100 BEAURECEUIL (FR); THOMAS, Cedric, 13100 AIX-EN-PROVENCE (FR)
(74) Mandataire: Cabinet Beaumont

(57) **Abrégé**

La présente description concerne un procédé de démarrage d'un circuit d'alimentation comprenant une alimentation à découpage, comprenant :
- une première phase dans laquelle, si une tension de sortie (VFB) de l'alimentation à découpage est inférieure à une première tension, l'alimentation à découpage fonctionne en modulation de largeur d'impulsions pour augmenter sa tension de sortie (VFB) jusqu'à ladite première tension ; et
- une deuxième phase de conduction forcée quand la tension de sortie (VFB) a atteint la première tension.

## Description

### Domaine technique

La présente description concerne de façon générale les circuits et dispositifs électroniques, et de façon plus particulière leur alimentation en énergie. La présente description concerne en particulier un circuit d'alimentation comprenant au moins une alimentation à découpage.

### Technique antérieure

Il existe plusieurs types de circuits d'alimentation électrique permettant de délivrer un couple courant/tension à un circuit, ou dispositif ou système électronique, ou plus généralement à une charge. Les alimentations linéaires et les alimentations à découpage sont des exemples de circuits d'alimentation.

Les différents types de circuits d'alimentation ont chacun des caractéristiques propres, et il peut être utile d'en combiner plusieurs. La combinaison d'une alimentation à découpage et d'un régulateur de tension est une combinaison usuelle dans un circuit d'alimentation.

Une alimentation à découpage est un circuit d'alimentation adapté à fournir une tension continue à partir d'une tension d'entrée. Les alimentations à découpage sont généralement des convertisseurs DC/DC, prenant en entrée une tension continue, mais certaines alimentations à découpage peuvent comprendre un étage de redressement leur permettant de prendre en entrée une tension alternative, par exemple, le secteur.

Il serait souhaitable de pouvoir améliorer au moins en partie certains aspects des circuits d'alimentation connus comprenant une alimentation à découpage.

### Résumé de l'invention

Il existe un besoin dans la technique pour des circuits d'alimentation plus performants comprenant une alimentation à découpage.

Il existe, plus particulièrement, un besoin dans la technique pour des circuits d'alimentation ayant une phase de démarrage plus rapide.

Il existe un besoin dans la technique pour des circuits d'alimentation ayant une phase de démarrage consommant moins d'énergie.

Un mode de réalisation pallie tout ou partie des inconvénients des circuits d'alimentation connus comprenant une alimentation à découpage.

Un mode de réalisation prévoit un procédé de démarrage d'un circuit d'alimentation comprenant une alimentation à découpage, comprenant :
- une première phase dans laquelle, si une tension de sortie de l'alimentation à découpage est inférieure à une première tension, l'alimentation à découpage fonctionne en modulation de largeur d'impulsions pour augmenter sa tension de sortie jusqu'à ladite première tension ; et
- une deuxième phase de conduction forcée quand la tension de sortie a atteint la première tension.

Selon un mode de réalisation, la première tension est la tension que délivre l'alimentation à découpage pendant un mode de conduction forcée.

Selon un mode de réalisation, la première tension est une tension continue injectée en entrée de l'alimentation à découpage.

Selon un mode de réalisation, la première tension est une tension continue injectée en entrée du circuit d'alimentation.

Selon un mode de réalisation, ladite tension de sortie est comparée à une deuxième tension, inférieure à la première tension, pendant une troisième phase précédant ladite première phase.

Un autre mode de réalisation prévoit un circuit de démarrage d'une alimentation à découpage adapté à mettre en oeuvre un procédé décrit précédemment.

Selon un mode de réalisation, le circuit comprend un circuit comparateur adapté à comparer la tension de sortie et une troisième tension.

Selon un mode de réalisation, la troisième tension est égale, pendant la première phase, à la première tension.

Selon un mode de réalisation, la troisième tension est égale, pendant la troisième phase, à la deuxième tension.

Selon un mode de réalisation, le circuit comprend, en outre, une machine d'état.

Selon un mode de réalisation, le circuit comparateur est commandé par la machine d'état.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, schématiquement et sous forme de blocs, un circuit d'alimentation ;

la figure 2 représente, schématiquement et sous forme de blocs, un mode de réalisation d'une alimentation à découpage ;

la figure 3 représente, schématiquement et sous forme de blocs, un mode de réalisation d'un circuit de démarrage de l'alimentation à découpage de la figure 2 ;

la figure 4 représente un organigramme illustrant un mode de réalisation d'un procédé de démarrage d'un circuit d'alimentation ; et

la figure 5 représente des chronogrammes de signaux et des allures de tensions du circuit de démarrage de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement général d'une alimentation à découpage ne sera pas détaillé. Les modes de réalisation et les modes de mise en oeuvre décrits étant compatibles avec les alimentations à découpage usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les signaux évoqués dans la description sont des signaux analogiques comprenant un état haut et un état bas correspondant, respectivement, à des données logiques "1" et "0". L'état haut représente, sauf mention contraire, un niveau de tension égal à une tension d'alimentation. L'état bas représente, sauf mention contraire, un niveau de tension égal à une tension de référence, par exemple la masse.

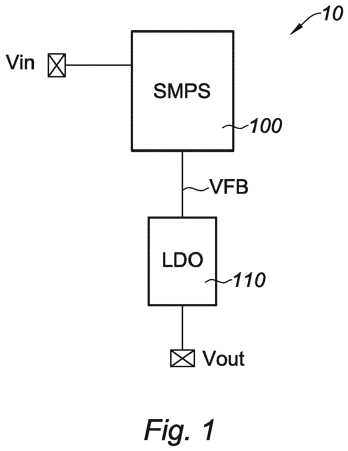

La figure 1 représente, schématiquement et sous forme de blocs, un circuit d'alimentation 10.

Le circuit 10 comprend, en série, une alimentation à découpage 100 (SMPS) et un circuit régulateur de tension 110 (LDO). Le circuit 10 reçoit, en entrée, une tension d'alimentation d'entrée Vin et des signaux de commande (non représentés en figure 1), et fournit, en sortie, une tension d'alimentation de sortie Vout et, par exemple, d'autres signaux de commande (non représentés en figure 1). La tension Vin est, plus particulièrement, reçue par l'alimentation à découpage 100, et la tension Vout est, plus particulièrement, fournie par le régulateur de tension 110. L'alimentation à découpage 100 fournit, en sortie, une tension d'alimentation VFB, continue, au circuit régulateur de tension 110.

Un circuit du type du circuit 10 peut avoir plusieurs modes de fonctionnement.

Un mode de fonctionnement classique du circuit 10 est le suivant. L'alimentation à découpage fonctionne en modulation de largeur d'impulsions et fournit une tension VFB différente de la tension Vin qu'elle reçoit en entrée. La tension VFB est ensuite lissée par le circuit régulateur 110.

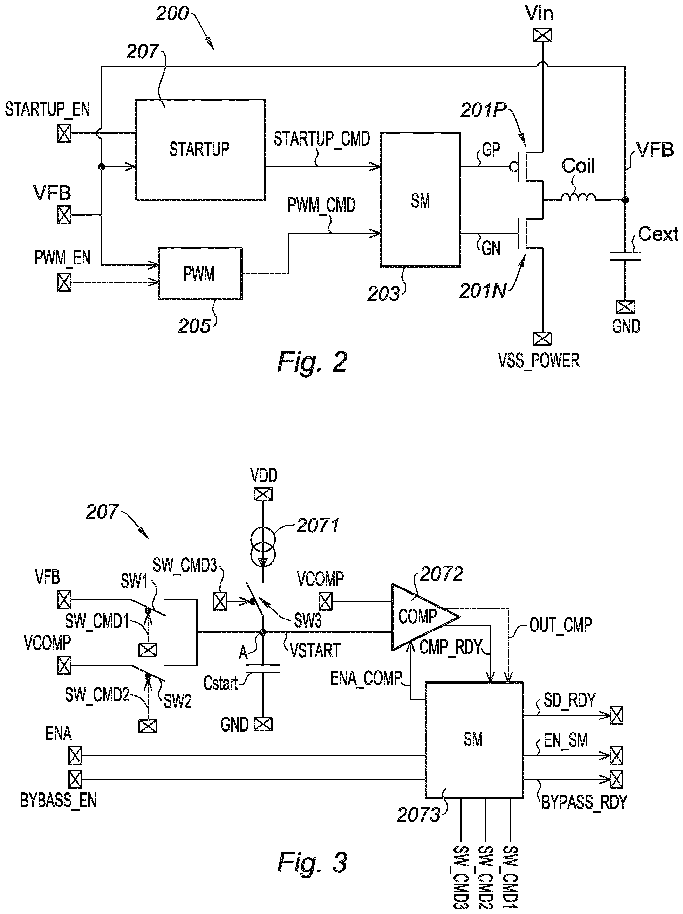

Un autre mode de fonctionnement du circuit 10 est un mode dit de conduction forcée (By Pass Mode) de l'alimentation à découpage 100, dans lequel l'alimentation à découpage 100 est "court-circuitée". Autrement dit, l'alimentation à découpage fournit une tension de sortie VFB égale à la tension d'entrée Vin. Pour cela, elle ne fonctionne pas en modulation de largeur d'impulsions, mais elle est forcée à fournir, en sortie, une tension égale à la tension d'entrée Vin. Ainsi, dans ce mode de fonctionnement, la tension VFB est égale à la tension d'entrée Vin. Ce mode de fonctionnement sera plus détaillé en relation avec la figure 2.

La figure 2 représente, schématiquement et sous forme de blocs, une structure d'un mode de réalisation d'une alimentation à découpage 200 adaptée à être utilisée dans un circuit d'alimentation du type du circuit 10 décrit en relation avec la figure 1.

L'alimentation à découpage 200 comprend un transistor MOS à canal N 201N et un transistor MOS à canal P 201P. Les transistors 201P et 201N sont connectés en série. Plus particulièrement, le drain du transistor 201N est relié, de préférence connecté, au drain du transistor 201P. La source du transistor 201P est reliée, de préférence connectée, à une borne recevant la tension d'entrée Vin. La source du transistor 201N est reliée, de préférence connectée, à une borne recevant une tension d'alimentation basse VSS_POWER. La tension d'alimentation basse VSS_POWER est, par exemple, la masse.

L'alimentation à découpage 200 comprend, en outre, une inductance Coil et un condensateur Cext. Une première borne de l'inductance Coil est reliée, de préférence connectée, aux drains des transistors 201N et 201P. Une deuxième borne de l'inductance Coil est reliée, de préférence connectée, à une première borne du condensateur Cext. Une deuxième borne du condensateur Cext est reliée, de préférence connectée, à une borne recevant une tension de référence GND, par exemple la masse. La tension de référence GND est, par exemple, égale à la tension d'alimentation basse VSS_POWER. La deuxième borne de l'inductance Coil fournit la tension de sortie VFB de l'alimentation à découpage 200.

L'alimentation à découpage 200 comprend, en outre, une machine d'état 203 (SM) fournissant des signaux GP et GN permettant de commander, respectivement, les grilles des transistors 201P et 201N. La machine d'état 203 reçoit, en entrée, des signaux de commande STARTUP_CMD et PWM_CMD détaillés ci-après.

L'alimentation à découpage 200 comprend, en outre, un circuit de modulation de largeur d'impulsions 205 (PWM) adapté à mettre en oeuvre un fonctionnement de l'alimentation à découpage 200 en modulation de largeur d'impulsions. Le circuit 205 reçoit, en entrée, entre autres, la tension de sortie VFB de l'alimentation à découpage 200, et des signaux de commandes PWM_EN. Le circuit 205 fournit, en sortie, au moins les signaux de commande PWM_CMD à la machine d'état 203. Le fonctionnement d'une alimentation à découpage en modulation de largeur d'impulsions est usuel et n'est pas décrit ici.

L'alimentation à découpage 200 comprend, en outre, un circuit de démarrage 207 (STARTUP). Le circuit 207 reçoit, en entrée, entre autres, la tension de sortie VFB, et des signaux de commande STARTUP_EN. Le circuit 207 fournit, en sortie, les signaux de commande STARTUP_CMD à la machine d'état 203. Le circuit 207 est décrit plus en détail en relation avec la figure 3.

La figure 3 représente, de façon schématique et sous forme de blocs, une structure du circuit 207 de l'alimentation à découpage 200 décrite en relation avec la figure 2.

Le circuit 207 reçoit, en entrée, la tension de sortie VFB de l'alimentation à découpage 200, une tension de comparaison VCOMP, une tension d'alimentation VDD, et les signaux de commande STARTUP_EN. Les signaux STARTUP_EN comprennent un signal d'activation ENA du circuit de démarrage 207, et un signal d'activation BYPASS-EN du mode de conduction forcée de l'alimentation à découpage 200.

Le circuit 207 fournit, en sortie, les signaux STARTUP_CMD qui comprennent un signal d'état SD_RDY, un signal d'activation EN_SM de la machine d'état 203, et un signal d'état BYPASS_RDY du mode de conduction forcée de l'alimentation à découpage 200.

Le circuit 207 comprend deux interrupteurs SW1 et SW2. L'interrupteur SW1 reçoit sur une première borne la tension VFB, et a une deuxième borne reliée, de préférence connectée, à un noeud A. L'interrupteur SW2 reçoit sur une première borne la tension VCOMP, et a une deuxième borne reliée, de préférence connectée, au noeud A. Les interrupteurs SW1 et SW2 sont commandés par des signaux SW_CMD1 et SW_CMD2.

Le circuit 207 comprend, en outre, un interrupteur SW3 et une source de courant 2071. Une première borne de l'interrupteur SW3 est reliée, de préférence connectée, au noeud A, et une deuxième borne de l'interrupteur SW3 est reliée, de préférence connectée, à une première borne de la source de courant 2071. Une deuxième borne de la source de courant 2071 reçoit la tension d'alimentation VDD. L'interrupteur SW3 est commandé par un signal SW_CMD3.

Le circuit 207 comprend, en outre, un condensateur Cstart. Une électrode du condensateur Cstart est reliée, de préférence connectée, au noeud A, et une deuxième électrode du condensateur Cstart est reliée, de préférence connectée, à une borne recevant la tension de référence GND.

Le circuit 207 comprend, en outre, un circuit comparateur 2072 (COMP). Le circuit 2072 est adapté à comparer à la tension VCOMP la tension du noeud A, notée VSTART. Le circuit 2072 est commandé par un signal ENA_COMP, et fournit, en sortie, un signal d'état CMP_RDY et un signal de sortie OUT_CMP.

Le circuit 207 comprend, en outre, une machine d'état 2073 (SM) recevant, en entrée, les signaux suivants :
- le signal d'activation ENA ;
- le signal d'activation BYPASS _EN du mode de conduction forcée de l'alimentation à découpage ;
- le signal CMP_RDY ; et
- le signal OUT_CMP.

La machine d'état 2073 fournit, en sortie, les signaux suivants :
- les signaux de commande SW_CMD1, SW_CMD2, et SW_CMD3 des interrupteurs SW1, SW2, et SW3 ;
- le signal d'activation ENA_COMP du circuit comparateur 2072 ;
- le signal d'état SD_RDY ;
- le signal d'activation EN_SM ; et
- le signal d'état BYPASS_RDY.

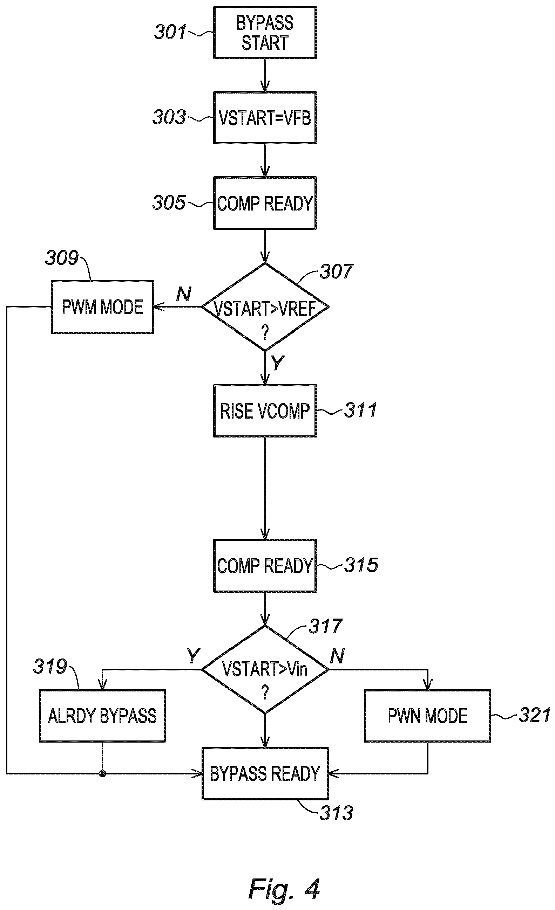

Le circuit 207 permet, entre autres, de démarrer l'alimentation à découpage 200 directement dans un mode de conduction forcée. Le fonctionnement et un mode de mise en oeuvre du circuit 207 sont détaillés en relation avec la figure 4.

La figure 4 est un organigramme illustrant un mode de mise en oeuvre du circuit de démarrage 207 décrit en relation avec la figure 3, dans le cadre d'un démarrage de l'alimentation à découpage 200 dans un mode de conduction forcée. L'alimentation à découpage est considérée dans un mode de conduction forcée lorsque sa tension de sortie VFB est égale à la tension d'entrée Vin, et quand le signal d'état BYPASS_RDY est à un niveau haut.

A une étape 301 (BYPASS START), on demande le démarrage de l'alimentation à découpage 200 dans un mode de conduction forcée. Pour cela, le signal d'activation ENA passe à un niveau haut, indiquant le démarrage de l'alimentation 200, et le signal BYPASS_EN passe également à un niveau haut, indiquant l'enclenchement d'un mode de conduction forcée de l'alimentation à découpage 200.

A une étape 303 (VSTART = VFB), la machine d'état 2073 commande la fermeture de l'interrupteur SW1 et l'ouverture des interrupteurs SW2 et SW3. La tension VSTART est alors égale à la tension VFB et le condensateur Cstart est chargé par la tension VFB. Le circuit comparateur 2072 est démarré.

A une étape 305 (COMP READY), le signal COMP_RDY passe à un niveau haut, le comparateur est prêt à être utilisé. La machine d'état 2073 commande l'ouverture des trois interrupteurs SW1, SW2, et SW3. La tension de comparaison VCOMP est, dans un premier temps, égale à une première tension de seuil basse VREF. Le condensateur Cstart fournit alors la tension VFB.

A une étape 307 (VSTART>VREF ?), le circuit comparateur compare la tension VSTART à la tension VCOMP, toujours égale à la tension VREF. Le résultat de cette comparaison est codé dans le signal de sortie du circuit comparateur OUT_COMP. Plus particulièrement, si la tension VSTART est inférieure à la tension VCOMP (sortie N) alors le signal de sortie OUT_COMP est à un état bas, et l'étape suivante est une étape 309 (PWM MODE). Si la tension VSTART est supérieure à la tension VCOMP (sortie Y) alors le signal de sortie OUT_COMP est à un état haut, et l'étape suivante est une étape 311 (RISE VCOMP).

A l'étape 309, l'alimentation à découpage est démarrée dans un mode de modulation de largeur d'impulsions pour augmenter sa tension de sortie VFB jusqu'à ce que cette tension VFB soit égale à la tension d'entrée Vin. L'étape suivante est alors une étape 313 (BYPASS READY) où la tension de sortie VFB de l'alimentation à découpage 200 est égale à la tension d'entrée Vin, et où le signal BYPASS_RDY passe à un niveau haut.

A l'étape 311, le signal d'activation SD_RDY est passé à un état haut. Le signal VCOMP est augmenté jusqu'à la valeur de la tension d'entrée Vin. Le circuit comparateur 2072 est arrêté, le signal COMP_RDY passe à un état bas, et le circuit comparateur est redémarré.

A une étape 315 (COMP READY), le comparateur est prêt à être utilisé, le signal COMP_RDY passe à un niveau haut. La machine d'état 2073 commande l'ouverture des trois interrupteurs SW1, SW2, et SW3. La tension de comparaison VCOMP est égale à la tension Vin.

A une étape 317 (VSTART>Vin ?), le circuit comparateur compare la tension VSTART, toujours égale à la tension de sortie VFB, à la tension VCOMP, alors égale à la tension Vin. Le résultat de cette comparaison est codé dans le signal de sortie du circuit comparateur OUT_COMP. Plus particulièrement, si la tension VSTART est supérieure à la tension VCOMP (sortie Y) alors le signal de sortie OUT_COMP est à un état bas, et l'étape suivante est une étape 319 (ALRDY BYPASS). Si la tension VSTART est inférieure à la tension VCOMP (sortie N) alors le signal de sortie OUT_COMP est à un état haut, et l'étape suivant est une étape 321 (PWM MODE).

A l'étape 319, la tension de sortie VFB de l'alimentation à découpage est déjà à un niveau supérieur ou égal à celui de la tension d'entrée Vin. La machine d'état 2073 commande l'ouverture des interrupteurs SW1 et SW3, et la fermeture de l'interrupteur SW2. En fermant l'interrupteur SW2, la capacité Cstart est utilisée comme capacité de découplage entre la tension VDD et la tension de référence GND. Le signal BYPASS_RDY passe à un état haut. L'étape suivante est alors l'étape 313.

A l'étape 321, la tension de sortie VFB n'est pas encore assez élevée pour que l'alimentation à découpage 200 soit dans un mode de conduction forcée. L'alimentation à découpage 200 est alors démarrée dans un mode de modulation de largeur d'impulsions pour augmenter sa tension de sortie VFB jusqu'à ce que cette tension VFB soit égale à la tension d'entrée Vin. La tension VFB suit une rampe douce pour ne pas endommager le transistor 201P de l'alimentation à découpage 200, en lui envoyant une tension trop élevée trop rapidement.

La machine d'état 2073 commande alors l'ouverture des interrupteurs SW1 et SW2, et la fermeture de l'interrupteur SW3. En fermant l'interrupteur SW3, la capacité Cstart se charge. De plus, une fois que la tension VFB est à la tension Vin la capacité Cstart est chargée est l'interrupteur SW3 est alors réouvert. Le signal BYPASS_RDY passe à un état haut. L'étape suivante est alors l'étape 313.

A l'étape 313, l'alimentation à découpage 200 a une tension de sortie VFB qui est supérieure ou égale à la tension d'entrée Vin. Pendant son fonctionnement, la tension de sortie VFB se stabilisera à la tension d'entrée Vin, et l'alimentation à découpage sera donc dans un mode de conduction forcée.

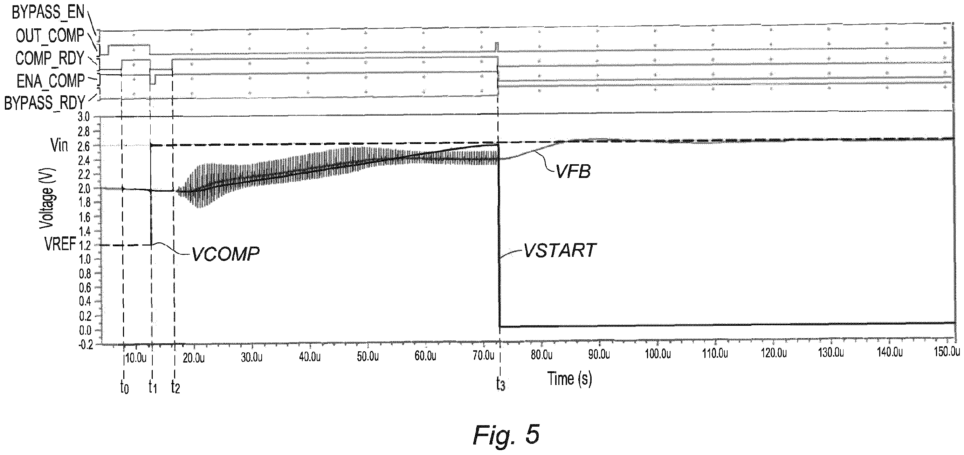

La figure 5 est un graphique regroupant des chronogrammes de signaux de commande et des allures de tensions de l'alimentation à découpage 200. Plus particulièrement, les chronogrammes et les allures représentées illustrent le procédé de démarrage décrit en relation avec la figure 4 de l'alimentation à découpage 200 décrite en relation avec la figure 2, dans le cas où la tension de sortie VFB de l'alimentation à découpage est supérieure à la première tension de seuil VREF et est inférieure à la tension d'entrée Vin.

Le graphique de la figure 5 regroupe plus particulièrement :
- un chronogramme du signal d'activation BYPASS_EN du mode de conduction forcée ;
- un chronogramme du signal de sortie OUT_COMP du circuit comparateur 2072 ;
- un chronogramme du signal d'état COMP_RDY du circuit comparateur 2072 ;
- un chronogramme du signal d'activation ENA_COMP du circuit comparateur 2072 ;
- un chronogramme du signal d'état BYPASS_RDY du mode de conduction forcée ;
- une allure de la tension de comparaison VCOMP ;
- une allure de la tension de sortie VFB de l'alimentation à découpage 200 ; et
- une allure de la tension VSTART du noeud A du circuit de démarrage 207 de l'alimentation à découpage 200.

Avant un instant initial t0, le circuit comparateur 2072 est activé, le signal ENA_COMP est à un état haut. Le circuit comparateur 2072 n'est, cependant, pas encore prêt à comparer les signaux qu'il reçoit en entrée, ainsi le signal COMP_RDY est à un état bas. Le signal de sortie OUT_COMP est arbitrairement à un état bas ou à un état haut. L'alimentation à découpage 200 n'est pas dans un mode de conduction forcée, ainsi le signal BYPASS_RDY est à un état bas, mais n'est pas non plus dans un mode de modulation de largeur d'impulsions. L'activation du mode de conduction forcée est, cependant, demandée, et le signal BYPASS_EN est à un état haut. La tension de sortie VFB de l'alimentation à découpage 200 est, dans le cas illustré ici, à un niveau de tension par exemple égal à 2 V. La tension de comparaison VCOMP est égale à la première tension de seuil VREF qui est, dans le cas illustré en figure 5, inférieure à la tension VFB, par exemple égale à 1,2 V. La tension VSTART est égale à la tension de sortie VFB.

A l'instant initial t0, le circuit comparateur 2072 est prêt, et effectue une comparaison entre le signal VFB et le signal de comparaison VCOMP (étapes 305 et 307 de la figure 4), le signal COMP_RDY passe à un état haut. Comme dit précédemment, la tension VFB est supérieure à la tension de comparaison VCOMP, donc le signal de sortie du comparateur 2072 est à un état haut.

A un instant t1, le circuit comparateur 2072 est réinitialisé, le signal ENA_COMP est passé successivement à un état bas puis à un état haut. Le circuit comparateur n'est donc plus prêt à effectuer une comparaison, le signal COMP_RDY passe à un état bas. Le signal de sortie OUT_COMP du circuit comparateur 2072 passe à un état bas. Le niveau de la tension de comparaison VCOMP est augmenté jusqu'à ce qu'elle atteigne le niveau de la tension d'entrée Vin de l'alimentation à découpage 200 (étape 311 de la figure 4), par exemple égale à 2,6 V en figure 5.

A un instant t2, le circuit comparateur 2072 est prêt à être utilisé, le signal COMP_RDY passe à un état haut. Comme dit précédemment, la tension VFB est inférieure à la tension Vin, le signal de sortie OUT_COMP est donc à un état bas.

L'alimentation à découpage 200 passe alors dans un mode de modulation de largeur d'impulsions et augmente progressivement la tension de sortie VFB jusqu'à ce qu'elle atteigne la tension Vin. La tension VSTART augmente également en suivant une rampe.

A un instant t3, la tension VFB atteint la tension Vin (étape 321 de la figure 4), le signal de sortie OUT_COMP du circuit comparateur 2072 passe à un état haut. La machine d'état 2073 désactive le circuit comparateur 2072, ainsi les signaux ENA_COMP et COMP_RDY passent tous deux à un état bas.

L'alimentation à découpage 200 est alors dans un mode de conduction forcée, le signal BYPASS_RDY passe à un état haut. La tension VSTART du mode de modulation par largeur d'impulsions décroit jusqu'à atteindre un niveau bas, par exemple la masse.

Un avantage de ce procédé de démarrage est qu'il est plus rapide et moins consommateur d'énergie par rapport à un procédé de démarrage en mode conduction forcée classique. En effet, le niveau de la tension de sortie d'une alimentation à découpage n'étant pas connu à tout moment, un mode de démarrage pourrait être d'attendre que la tension de sortie de l'alimentation à découpage atteigne une tension seuil basse pour, ensuite, l'augmenter de nouveau jusqu'à la tension voulue. Un tel mode de démarrage serait alors plus lent et plus consommateur d'énergie.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, la tension d'entrée de l'alimentation à découpage pourrait être une tension alternative, mais dans ce cas l'alimentation à découpage comprendrait un étage de redressement pour convertir la tension d'entrée alternative en une tension d'entrée continue. Dans ce cas, l'alimentation à découpage est dans un mode de conduction forcée une fois que sa tension de sortie est égale à la tension d'entrée continue.

Enfin, la mise en oeuvre pratique des modes de réalisation et variantes décrits est à la portée de l'homme du métier à partir des indications fonctionnelles données ci-dessus.

## Revendications

1. Procédé de démarrage d'un circuit d'alimentation (10) comprenant une alimentation à découpage (200), comprenant :
- une première phase dans laquelle, si une tension de sortie (VFB) de l'alimentation à découpage (200) est inférieure à une première tension (Vin), l'alimentation à découpage (200) fonctionne en modulation de largeur d'impulsions pour augmenter sa tension de sortie (VFB) jusqu'à ladite première tension (Vin) ; et
- une deuxième phase de conduction forcée quand la tension de sortie (VFB) a atteint la première tension (Vin).

2. Procédé selon la revendication 1, dans lequel la première tension (Vin) est la tension que délivre l'alimentation à découpage (200) pendant un mode de conduction forcée.

3. Procédé selon la revendication 1 ou 2, dans lequel la première tension (Vin) est une tension continue injectée en entrée de l'alimentation à découpage (200).

4. Procédé selon l'une quelconque des revendications 1 à 3, dans lequel la première tension (Vin) est une tension continue injectée en entrée du circuit d'alimentation (10).

5. Procédé selon l'une quelconque des revendications 1 à 4, dans lequel ladite tension de sortie (VFB) est comparée à une deuxième tension (VREF), inférieure à la première tension (Vin), pendant une troisième phase précédant ladite première phase.

6. Circuit de démarrage (207) d'une alimentation à découpage (200) adapté à mettre en oeuvre le procédé selon l'une quelconque des revendications 1 à 5.

7. Circuit selon la revendication 6, comprenant un circuit comparateur (2072) adapté à comparer la tension de sortie (VFB) et une troisième tension (VCOMP).

8. Circuit selon la revendication 7, dans lequel la troisième tension (VCOMP) est égale, pendant la première phase, à la première tension (Vin).

9. Circuit selon la revendication 7 ou 8, dans lequel la troisième tension (VCOMP) est égale pendant la troisième phase, à la deuxième tension (VREF).

10. Circuit selon l'une quelconque des revendications 6 à 9, comprenant, en outre, une machine d'état (2073).

11. Circuit selon la revendication 10 dans son rattachement à la revendication 7, dans lequel le circuit comparateur (2072) est commandé par la machine d'état (2073).
